# EUROPEAN PATENT SPECIFICATION

(11) **EP 1 548 495 B1**
(45) Date of publication and mention of the grant of the patent: **27.02.2008**
(21) Application number: 03784211.9
(22) Date of filing: 30.07.2003
(51) Int. Cl.: G03B 21/00

(54) **INTERNAL DEVICE FOR PROJECTING IMAGES ON POLYHEDRONS WITH POLARIZABLE CRYSTAL FACES AND PROJECTION METHOD**
INTERNE EINRICHTUNG ZUM PROJIZIEREN VON BILDERN AUF POLYEDER MIT POLARISIERBAREN KRISTALLFLÄCHEN UND PROJEKTIONSVERFAHREN
DISPOSITIF PROJECTEUR INTERNE D'IMAGES SUR DES POLYEDRES A FACES DE VERRE POLARISABLE ET PROCEDE DE PROJECTION

(30) Priority: 31.07.2002 ES 200201868
(43) Date of publication of application: 29.06.2005
(73) Proprietor: Mana Visual Audio S.L., 33002 Oviedo (ES)
(72) Inventor: GONZALEZ COLUNGA, Alfredo, E-33002 Oviedo (ES)
(86) International application number: PCT/ES2003/000396
(87) International publication number: WO 2004/015494

(56) References cited:
- DE-A- 3 533 448
- US-A- 2 368 099
- US-A- 2 380 241

## Description

### Background to the previous technical situation.

It is unknown so far in the background to the previous technical situation a device with a projector of images situated in the inner part of the smaller polyhedron of two or more hollow polyhedrons which are contained one another being inscribed but not conjugated or encapsulated with contact faces, since it is essential that there is enough distance between their faces so that an external spectator could appreciate the three-dimensional or space effect that is proposed and being the smaller one contained in the bigger that circumscribes it and this one successively in the next, all of them could be either concentric, in that case they would have the same centre, or could be leaned on a same base or each one could have different base in different levels, essentially characterised by being fitted each one with faces of translucent glass polarizable to transparent making it possible to project images in a successive way on every polyhedron, the inner one or any of the outer ones when the glass polarization is activated since on becoming transparent it allows to modify the glass screen where the image is projected by retro projection with a three-dimensional effect and with a demonstrative, advertising or exhibition purpose. The rear projection itself is of public domain as a way of projection where the image is formed ( projected) from the rear of the screen for the eye of an observer. The patent US 2380241 (JELLEY) considers a case of rear projection with an inner projector ( element 42 of the figure 6) but its unique claim only relates a multilayer screen with a plate coated with a polarizing fix layer for reducing anomalous external reflection from a daylight source for the observer but it is not able of change of the translucent state of the screen at choice of an observer and the screen is not inscribed in other successive screens to vary the position of the rear projected image. The element 44 of the figure 6 of that patent is only the illuminated picture plane and the elements 43 and 47 are two joint layers of the same screen not two different screens separated between them to make possible different spatial projections of the picture.

### Disclosure of the invention.

The proposed invention is a retro projection procedure as defined in claim 4 and an appropriate device as defined in claim 1 for its working, based on the retro projection of images on concentric or successive screens which are activated successively in order to fix the image of the projector on every screen since the screens consist of two sheets of glass or another transparent material with a liquid between both sheets which is liable to conversion to transparent or translucent by electric polarization or depolarisation , so that the image stops reflecting on the screen when it is transparent and on the contrary the image is reflected on the one that is in translucent state, producing the effect of moving the space plane where the image it is formed, approaching or moving off from the spectator and increasing or decreasing its size.

As a result the procedure is a system of images retro projection associated to the next technical characteristics:
1°.- The source of images will be placed inside the inner polyhedron of two or more hollow ones preferably regular with the same shape although irregular or with a different shape polyhedrons could be used if they are provided with lens, mirrors or auxiliary projectors of redirection of images situated in those faces of each polyhedron that are not used as screens in order to the auxiliary means are made invisible to the spectator.
2°.- The polyhedrons will be disposed in a way that each one is interior or inscribed in respect of the next one that circumscribes it with separation between its faces so that each polyhedron face used as screens are parallel total or partially inscribed inside the luminic angle of projection of the images, though in certain cases the inscribed polyhedrons could be conjugated or have their faces in angle in respect of those of the circumscribed polyhedron in which case they will have to be associated to a complex system of lens, mirrors or another optical means which redirect by reflection the images to the next polyhedron or have auxiliary independent projectors, since the essential content of the invention is the visual effect that is caused to the spectator by a multiscreen device in which each screen inscribed inside another bigger one or circumscribed to another smaller one could become transparent or translucent by modifying the special location of the same image in a three-dimensional system. As far as the present description is concerned, an inscribed polyhedron is defined as the one, which is contained in another bigger one that circumscribes it, similarly to what is said about a polygon inscribed inside a circumscribed polygon.
3°.- The polyhedron faces will be made of a special crystal, in glass, methacrylate or any other substance, characterised by being translucent under ordinary conditions, operating in this case to an external observer as a screen to retro project the images projected on it emitted from the inner part of the polyhedrons, or becoming transparent by polarization or another method when a light electrical current pass through it. In such a case the images that appear from the device projector of images will pass through the transparent glass freely and they will project on the next polyhedron faces that are translucent, directly or by reflection of the image by means of lens or auxiliary mirrors, and they could also be emitted on the circumscribed polyhedron by means of independent auxiliary projectors, being essential that they are seen by an outside observer by retro projection in one or another screen being contained each one in the bigger one, and that the screen where the images are projected could be modified at the choice of an operator or the spectator himself.
4°.- With a device of dynamic effect which modifies the polyhedrons translucent or transparent state by activating or deactivating the glass polarization, like a computer or another system that regulates the electrical current of polarization of each polyhedron glasses, it will be possible to project images from the inside of them, successively on any of the faces of every polyhedron, depending on whether they are polarized or not, and thus each polyhedron could act in an independent way in a three-dimensional multiscreen system.
5°.- An auxiliary system of lens, mirrors or auxiliary independent projectors will have to make sure that the same image emitted by a projector or from an internal bunch of projectors is appropriately directed for its projection or it is projected from an auxiliary projector on each polyhedron faces.
6°.- The internal images projector in every case will remain concealed to the spectator just because there will always be between the spectator and the projector an activated screen with images projected on it that will prevent the projector from being seen. This one could be concealed as the case may require in order to make it disappear from the inner polyhedron in which is contained to make it invisible supposing that the operator polarizes the faces of all the polyhedrons making them totally transparent.
7°.- The lens or auxiliary mirrors of redirection of images and as the case may be the independent auxiliary projectors, will be installed in one of the polyhedrons faces that is not used as a screen, so they stay concealed to the spectator sight on those polyhedrons faces that operate as screens.

The device is a projector located in the inner polyhedron of two or more polyhedral bodies inscribed each one in the bigger one that contains it, concentric or not, provided with preferably parallel faces which are separated between them and inscribed into the emitter angle of projection of light, made of translucent polarizable crystal, either glass, methacrylate or any other material, provided with a system of lens or multidirectional mirrors in order to allow the projection of the same image on all the faces of every glass polyhedron from the inside so that glass polarization and depolarisation allow the image to be seen in any of the glass polyhedrons by modifying its three-dimensional location in space simultaneously in all the polyhedron faces or in those selected as screens without the images projector is accessible to the eye of the spectator since it is located inside and because an activated screen always exists between the spectator and the projector or as the case may require by concealing the projector in order to make it disappear if all screens are polarized and made transparent. In that way a device of projection with luminic, three-dimensional and dynamic effects, able of holding the spectator attention at high degree with an advertising, didactic or entertainment purpose is obtained.

### Instructions as to the best way of bringing the invention into effect.

It is proposed as to the best way of bringing the invention into effect the construction of two hollow concentric cubes, with side faces of glass or multilaminar methacrylate provided within its sheets with a liquid polarizable under the action of a low-intensity current that causes its transparency effect by polarization as the one used in any of the notorious patents or trademarks on the market in order to activate the transparency of translucent glass screens.

In the geometrical centre of those polyhedrons the system is provided with a projector or a bunch of images projectors which by means of a set of lens or mirror reflects the same image on every face of the polyhedron where it is contained, being able of making it indifferently in the inner polyhedron if its glass faces are translucent in order to allow that the screen effect of the image is produced in them, or in case that the faces of that inner polyhedron are polarized and made transparent, they could project on those of the outer polyhedron or on the following one that will have been depolarised and transformed to a translucent state with the same purpose, provided that the faces of the polyhedron placed in the middle as the case may be are in transparent state. In that way the same image could be seen in every face of each polyhedron, not only on the outer one but also on any of the inner ones, and so its projection could be alternated dynamically in each polyhedron with the effect of the modification of the three-dimensional location of the images projected on all the faces of each one, without the projector contained in the centre is visible, in order to hold intensely and with a new way the spectator attention with a didactic, advertising or entertainment aim.

The association of the device to a system of sensors (either of a luminic, acoustic or thermal nature) or as the case may require to a computer, allows that a programmed sequence of projections by response to a stimulus as the mere presence of an spectator o any other stimulus that activates the sensors, is activated.

### Technical field.

The described invention has industrial application as projector with a didactic, advertising or entertainment aim.

## Claims

1. A system for projecting images on inscribed polyhedrons having polarizable faces, comprising:
- an inner rear projector or bunch of projectors for projecting images such as pictures or movies;
- a polyhedron structure comprising two or more inscribed polyhedron bodies, concentric or not, the inner rear projector or bunch of projectors being located in the most inner polyhedron wherein.
- the faces of each polyhedron body being screens formed by two sheets of glass. methacrylate or any other multilaminar material with the liquid between them polarizable by an electrical current for making the screen to become transparent when electrical current is applied and become translucent when the current stops.
- a transparent screen lets an image or a portion of image pass through it toward the next screen or outside the polyhedron structure and a translucent screen forms the image or a portion of image,
- an image or a portion of an image can be formed on one or another corresponding screen so as to modify the tri-dimensional location in the space of an image or a portion of image;
- a spectator is allowed to see an image or a portion of an image on one or another of the corresponding screens of the polyhedron bodies without seeing the inner rear projector or bunch of projectors since a translucent screen is always between the spectator and said inner rear projector or bunch of projectors or all the screens become translucent.:
- the system is able of obtaining luminic, tri-dimensional and dynamic effects for holding the spectator attention at high- degree with an advertising, didactic for entertainment aim.

2. The system according to Claim 1 wherein the inner rear projector or bunch of projectors is associated with a system of multidirectional lens or mirrors or independent auxiliary projectors in the case in which the faces of the polyhedron bodies are not parallel or the polyhedron bodies are conjugated or irregular.

3. The system according two Claim I wherein the transparent or translucent state of a screen is activated into a sequence by means of a system of luminic, acoustic or thermal sensors which reacts to a stimulus or external agent, associated or not to a computer able to programme the polarization of each screen by means of an electrical current and to select the images to emit by the inner rear projector or bunch of projectors.

4. A projection procedure utilizing a system for projecting images on inscribed polyhedrons having polarizable faces, comprising;
- an inner rear projector or bunch of projectors for projecting images such as pictures or movies;
- a polyhedron structure comprising two or more inscribed polyhedron bodies, concentric or not, the inner rear projector or bunch of projectors being located in the most inner polyhedron; wherein.
- the faces of each polyhedron body being screens formed by two sheets of glass, methacrylate or any other multilaminar material with the liquid between them polarizable by an electrical current for making the screen to become transparent when electrical current is applied and become translucent when the current stops.
- a transparent screen lets an image or a portion of image pass through it toward the next screen or outside the polyhedron structure and a translucent screen forms the image or a portion of image,
- an image or a portion of an image can be formed on one or another corresponding screen so as to modify the tri-dimensional location in the space of an image or a portion of image;
- a spectator is allowed to see an image or a portion of an image on one or another of the corresponding screens of the polyhedron bodies without seeing the inner rear projector or bunch of projectors since a translucent screen is always between the spectator and said inner rear projector or bunch of projectors or all the screens become translucent:
the procedure comprising the step of:
selectively polarize or depolarize by electrical current the liquid between the two sheets of a screen so as to cause the screen to become transparent or translucent in order to project an image or a portion of image, so as to obtain luminic, tri-dimensional and dynamic effects for holding the spectator attention at high-degree with an advertising, didactic or entertainment aim.

## Patentansprüche

1. Ein System, um Bilder auf beschriebene Polyeder mit polarisierenden Flächen zu projizieren, einbegriffen:
- ein Innenretroprojektor oder ein Komplex von Projektoren, um Bilder wie zum Beispiel Fotos oder Filme zu projizieren;
- eine Polyederstruktur, die zwei oder mehr konzentrische oder nicht konzentrische Polyederkörper enthält, der Innenretroprojektor oder der Komplex der Projektoren befindet sich im innersten Polyeder; wo
- die Flächen von jedem der Polyederkörper Bildschirme sind, die von zwei Glasscheiben gebildet werden, Methacrylat, oder irgendein anderes mehrfach lamelliertes Material mit Flüssigkeit dazwischen, polarisierbar von einem elektrischen Strom, um den Bildschirm transparent werden zu lassen, wenn elektrischer Strom angewand wird und durchscheinend, wenn der Strom ausbleibt,
- ein transparenter Bildschirm lässt ein Bild oder den Teil eines Bildes durch auf den nächsten Bildschirm oder nach außerhalb der Polyederstruktur und ein durchscheinender Bildschirm formt das Bild oder einen Bildteil,
- ein Bild oder ein Bildteil kann auf dem einen oder anderen entsprechenden Bildschirm gebildet werden, um die dreidimensionale Lage im Raum eines Bildes oder eines Bildteils zu modifizieren;
- einem Betrachter wird es ermöglicht, ein Bild oder den Teil eines Bildes auf dem einen oder anderen entsprechenden Bildschirm auf den Polyederkörpern zu sehen, ohne den Innenretroprojektor oder den Komplex der Projektoren zu sehen, da sich immer ein durchscheinender Bildschirm zwischen dem Betrachter und dem besagten Innenretroprojektor oder dem Komplex der Projektoren befindet, oder alle Bildschirme werden durchscheinend;
- das System ist fähig, Lichteffekte und dreidimensionale und dynamische Effekte zu erzeugen, um die Aufmerksamkeit des Zuschauers auf einem hohen Niveau zu halten, was einen Werbe-, Unterhaltungs- und didaktischen Zweck erfüllt.

2. Das System, bezogen auf Anspruch 1, in dem der Innenretroprojektor oder ein Komplex von Projektoren verbunden ist mit einem System von Linsen und Spiegeln in verschiedenen Richtungen oder unabhängigen Hilfsprojektoren im Falle, dass die Flächen der Polyederkörper nicht parallel sind oder dass die Polyederkörper konjugiert oder unregelmäßig sind.

3. Das System, bezogen auf Anspruch 1, in dem der transparente oder durchscheinende Zustand eines Bildschirms in einer Sequenz mittels akustischer, thermaler oder Lichtsensoren aktiviert wird, die auf einen externen Reiz reagieren, verbunden oder nicht mit einem Computer, der fähig ist, mittels eines elektrischen Stroms die Polarisierung von jedem Bildschirm zu programieren und die von einem Innenretroprojektor oder einem Komplex von Projektoren zu sendenden Bildern auszuwählen.

4. Ein Projektionsverfahren, das ein System benutzt, um Bilder auf beschriebene Polyederkörper mit polarisierenden Flächen zu projizieren, einbegriffen:
- ein Innenretroprojektor oder ein Komplex von Projektoren, um Bilder wie zum Beispiel Fotos oder Filme zu projizieren;
- eine Polyederstruktur, die zwei oder mehr konzentrische oder nicht konzentrische Polyederkörper enthält, der Innenretroprojektor oder der Komplex der Projektoren befindet sich im innersten Polyeder; wo
- die Flächen von jedem der Polyederkörper Bildschirme sind, die von zwei Glasscheiben gebildet werden, Methacrylat, oder irgendein anderes mehrfach lamelliertes Material mit Flüssigkeit dazwischen, polarisierbar von einem elektrischen Strom, um den Bildschirm transparent werden zu lassen, wenn elektrischer Strom angewand wird und durchscheinend, wenn der Strom ausbleibt,
- ein transparenter Bildschirm lässt ein Bild oder den Teil eines Bildes durch auf den nächsten Bildschirm oder nach außerhalb der Polyederstruktur und ein durchscheinender Bildschirm formt das Bild oder einen Bildteil,
- ein Bild oder ein Bildteil kann auf dem einen oder anderen entsprechenden Bildschirm gebildet werden, um die dreidimensionale Lage im Raum eines Bildes oder eines Bildteils zu modifizieren;
- einem Betrachter wird es ermöglicht, ein Bild oder den Teil eines Bildes auf dem einen oder anderen entsprechenden Bildschirm auf den Polyederkörpern zu sehen, ohne den Innenretroprojektor oder den Komplex der Projektoren zu sehen, da sich immer ein durchscheinender Bildschirm zwischen dem Betrachter und dem besagten Innenretroprojektor oder dem Komplex der Projektoren befindet, oder alle Bildschirme werden durchscheinend;
das Verfahren enthält den Schritt von:
selektiver Polarisierung oder Depolarisierung der Flüssigkeit zwischen den zwei Lamellen eines Bildschirms durch elektrischen Strom, um zu erreichen, dass der Bildschirm transparent oder durchscheinend wird, so dass ein Bild oder der Teil eines Bildes projiziert wird, um Lichteffekte und dreidimensionale und dynamische Effekte zu erzeugen, damit die Aufmerksamkeit des Zuschauers auf einem hohen Niveau gehalten wird, was einen Werbe-, Unterhaltungs- und didaktischen Zweck erfüllt.

## Revendications

1. Un système pour projeter des images sur des polyèdres inscrits qui ont des faces polarisables :
- un rétroprojecteur ou ensemble de rétroprojecteurs intérieurs pour projeter des images comme des dessins animés ou des films;
- une structure de polyèdres comprenant deux ou plus corps polyédriques inscrits, concentriques ou non, avec le rétroprojecteur ou l'ensemble de rétroprojecteurs situés dans le polyèdre le plus intérieur dans laquelle
- les faces de chaque corps polyédrique sont des écrans formés par deux couches de verre, de méthacrylate ou de n'importe quel autre matériau multicouche, et le liquide entre elles sera polarisable par un courant électrique pour faire en sorte que l'écran devienne transparent lors de l'application de courant électrique et translucide lorsque le courant est interrompu,
- un écran transparent laisse qu'une image ou une partie d'elle passe à travers lui vers l'écran suivant ou en dehors de la structure polyédrique et un écran translucide forme l'image ou la portion de l'image,
- une image ou une portion d'image peut se former sur un écran ou un autre correspondant de sorte que l'emplacement tridimensionnel d'une image ou d'une portion d'image se modifie dans l'espace;
- le spectateur peut alors voir une image ou une portion d'image sur un écran ou sur un autre des écrans correspondants aux corps polyédriques sans voir le rétroprojecteur ou l'ensemble de rétroprojecteurs intérieurs car il y a toujours un écran translucide entre le spectateur et le rétroprojecteur ou cet ensemble de rétroprojecteurs ou encore les écrans deviennent translucides;
- le système a la capacité d'obtenir des effets luminiques, tridimensionnels et dynamiques pour capter au maximum l'attention du spectateur dans un but publicitaire, didactique ou de spectacle.

2. Le système, conformément à la revendication 1, a le rétroprojecteur- ou l'ensemble de rétroprojecteurs intérieurs- associé à un système de lentilles ou de miroirs ou de projecteurs auxiliaires indépendants multidirectionnels dans le cas où les faces des corps polyédriques ne sont pas parallèles ou si les corps polyédriques sont conjugués ou irréguliers.

3. Dans le système, conformément à la revendication 1, l'état transparent ou translucide d'un écran est activé dans une séquence au moyen d'un système de capteurs luminiques, acoustiques ou thermiques qui réagit à une stimulation ou à un agent externe associé et non pas à un ordinateur capable de programmer la polarisation de chaque écran au moyen d'un courant électrique et de sélectionner les images à émettre par le rétroprojecteur ou par l'ensemble de rétroprojecteurs intérieurs.

4. Un procédé de projection utilisant un système pour projeter des images sur des polyèdres inscrits qui ont des faces polarisables, comprenant :
- un rétroprojecteur ou ensemble de rétroprojecteurs intérieurs pour projeter des images comme des dessins animés ou des films ;
- une structure de polyèdres comprenant deux, ou plus, corps polyédriques inscrits concentriques ou non, avec le rétroprojecteur ou l'ensemble de rétroprojecteurs situés dans le polyèdre le plus intérieur dans lequel
- les faces de chaque corps polyédrique sont des écrans formés par deux couches de verre, de méthacrylate ou de n'importe quel autre matériau multicouche, dont le liquide entre elles sera polarisable par un courant électrique pour faire en sorte que l'écran devienne transparent lors de l'application de courant électrique et translucide lorsque le courant est interrompu,
- un écran transparent laisse qu'une image ou une partie d'elle passe à travers lui ver l'écran suivant ou en dehors de la structure polyédrique et un écran translucide forme l'image ou la portion de l'image,
- une image ou une portion d'image peut se former sur un écran ou un autre correspondant de sorte que l'emplacement tridimensionnel d'une image ou d'une portion d'image se modifie dans l'espace;
- le spectateur peut alors voir une image ou une portion d'image sur un écran ou sur un autre des écrans correspondants aux corps polyédriques sans voir le rétroprojecteur ou l'ensemble de rétroprojecteurs intérieurs car il y a toujours un écran translucide entre le spectateur et le rétroprojecteur ou l' ensemble de rétroprojecteurs ou encore les écrans deviennent translucides;
Le procédé inclut la démarche de :
- polarisation ou dépolarisation sélectivement par courant électrique le liquide entre les deux lames d'un écran pour faire en sorte que l'écran devienne transparent ou translucide pour projeter une image ou une portion d'image afin de permettre des effets luminiques, tridimensionnels et dynamiques afin de capter au maximum l'attention du spectateur dans un but publicitaire, didactique ou de spectacle.
